# EUROPEAN PATENT SPECIFICATION

(11) **EP 2 716 941 B1**
(45) Date of publication and mention of the grant of the patent: **24.04.2019**
(21) Application number: 13187031.3
(22) Date of filing: 02.10.2013
(51) Int. Cl.: F16H 63/50, F16H 61/682, F16H 61/04, F16H 59/54

(54) **Straddle-type vehice with throttle control during shift-down**
Grätschsitz-Fahrzeug mit Drossilklappensteuerung bei Rückschaltung
Véhicule de type à enfourcher avec contrôle du papillon de gaz pendant le retrogradage

(30) Priority: 03.10.2012 JP 2012221006
(43) Date of publication of application: 09.04.2014
(73) Proprietor: Yamaha Hatsudoki Kabushiki Kaisha, Iwata-shi, Shizuoka 438-8501 (JP)
(72) Inventor: Fukushima, Kenji, Iwata-shi, Shizuoka 438-8501 (JP)
(74) Representative: Grünecker Patent- und Rechtsanwälte PartG mbB

(56) References cited:
- EP-A2- 2 149 488
- JP-A- 2005 042 872
- JP-A- 2007 032 381
- US-A1- 2008 312 035

## Description

This invention relates to a straddle-type vehicle according to the preamble of independent claim 1 and a method for controlling **a** straddle-type vehicle according to the preamble of independent claim 5. Such a straddle-type vehicle and such a method can be taken from the prior art document EP 2 149 488 A2. Moreover, prior art document US 2008/312035 A1 relates to a vehicle engine control apparatus for an automobile. Said teaching refers to determining whether or not a deceleration is required during shift operation, especially shift-down operation. In case no deceleration is required, the engine speed is increased up to a first target rotational speed value, which is a rotational speed required for the vehicle travel in the post-shift target gear position, i.e. for engine speed to be balanced with respect to the vehicle speed and the shift shock to be suppressed as much as possible. In case further deceleration is intended, the engine control unit changes to a second target rotational speed value that is smaller than the first target rotation speed value, in order to increase the feeling of deceleration. In case no further deceleration is requested by means of the engine, for example during operation of the brake, the first target rotational speed value is selected.

In related art, there have been straddle-type vehicles each having a throttle valve provided in an engine, a transmission including a plurality of transmission gears, and a clutch provided in a power transmission path between the engine and the transmission, and controlling them using an actuator. JP 2004-11774 A has disclosed a motorcycle as an example of the straddle-type vehicle. In a shift-down operation, at the time when the gear position is changed with the clutch in the non-engagement state, the rotation speed of the driven member of the clutch becomes higher than the rotation speed of the drive member (in this description, the driven member means a member arranged toward the transmission, and the drive member means a member arranged toward the engine). The controller of the motorcycle changes the gear position, and then, maintains the clutch in the semi-engagement state for a while. Thereby, the rotation speed of the drive member of the clutch, in other words, the engine speed becomes gradually higher. An engine speed at the time of the completion of the shift-down operation (hereinafter, will be referred as "shift-down completion speed") is determined by the vehicle speed and the transmission gear ratio of the gear position made by the gearshift (shift-down). After the engine speed reaches the shift-down completion speed (i.e., when the difference in rotation speed between the drive member and the driven member of the clutch is eliminated) by keeping the clutch in the semi-engagement state, the controller returns the clutch into the engagement state and completes the shift-down operation.

The motorcycle in JP 2004-11774 A controls the throttle opening to open the throttle valve for increasing the engine speed once in shift-down operation, and thereby, smoothly shifts the transmission gear. That is, when the opening of the throttle valve is increased while the clutch is in the non-engagement state, the engine speed increases toward the shift-down completion speed, and thus, the time for maintaining the semi-engagement state can be reduced without occurrence of gearshift shock.

However, when only smooth shifting of the transmission gear is taken into consideration, it may be possible that throttle control against the intension of a rider is executed during the shift-down operation, and as a result, the rider may be less comfortable.

An object of the invention is to provide a straddle-type vehicle and a method for controlling a straddle-type vehicle by which comfortable traveling can be obtained during shift-down operation. According to the present invention said object is solved by a straddle-type vehicle having the features of independent claim 1. Moreover, said object is also solved by a method for controlling a straddle-type vehicle having the features of independent claim 5. Preferred embodiments are laid down in the dependent claims.

A straddle-type vehicle according to one embodiment includes a throttle valve that adjusts an amount of air supplied to an engine; a transmission including a plurality of transmission gears; a clutch provided in a power transmission path between the engine and the transmission; a controller that controls the engine, the transmission, and the clutch; and a braking system including a braking device that applies a braking force to the vehicle and a brake operation member operated by a rider to activate the braking device. During shift-down operation of the transmission, the controller temporarily restricts power transmission through the clutch and executes throttle control to increase an engine speed. The controller includes a first throttle control unit that sets a parameter of control of the throttle valve to a first value and executes throttle control according to the first value, where the first value is set so that the engine speed increases to a first speed lower than a shift-down completion speed which is an engine speed at the time when the shift-down operation is completed. The controller includes a second throttle control unit that sets the parameter of control of the throttle valve to a second value and executes throttle control according to the second value, where the second value is set so that the engine speed increases to a second speed which has a difference smaller than that of the first speed from the shift-down completion speed. The controller selects one of the control by the first throttle control unit and the control by the second throttle control unit according to an operating state of the braking system.

The first value used by the first throttle control unit is set so that the engine speed increases to the first speed lower than the shift-down completion speed. Accordingly, the engine brake may be allowed to act during shift-down operation. Therefore, for example, when shift-down operation is executed in the gentle speed reduction situation of the vehicle, comfortable traveling may be realized. The second value used by the second throttle control unit is set so that the engine speed may increase to the second speed having the difference smaller than that of the first rotation speed from the shift-down completion speed. Accordingly, when the control by the second throttle control unit is performed, the engine brake can be suppressed from being generated, compared to the case where the control by the first throttle control unit is performed. Depending on the operating state of the braking device that applies the braking force to the vehicle, the generation of the engine brake during shift-down operation may hinder the comfortable traveling. For example, when a rider reduces the speed of the vehicle by braking operation, the engine brake during shift-down operation is not necessarily suitable for the rider's intention, and may hinder the comfortable traveling. According to the present teaching, one of the control by the first throttle control unit and the control by the second throttle control unit is selected, based on the operating state of the braking system. Accordingly, when the generation of the engine brake is not suitable, the generation of the engine brake during shift-down operation may be suppressed. As a result, comfortable traveling may be obtained during shift-down operation.

The controller selects the control by the second throttle control unit when the brake operation member is operated as defined in claims 1 and 5. In this manner, the generation of the engine brake may be suppressed when the rider reduces the speed of the vehicle by braking operation, and thereby, comfortable traveling may be realized.

The braking system may include a brake control unit that executes anti-brake-lock control to suppress lock of a driving wheel by reducing activation of the braking device, and the controller may select the control by the second throttle control unit when the anti-brake-lock control is activated. In this manner, the generation of the engine brake may be suppressed when the anti-brake-lock control is activated, and thereby, unnatural behavior of the vehicle may be suppressed.

The controller may estimate the operating state of the braking system based on deceleration of the vehicle. Thereby, the number of sensors may be reduced.

### BRIEF DESCRIPTION OF THE DRAWINGS

Figs. 1A and 1B show an appearance of a motorcycle according to an embodiment.
Fig. 2 is a block diagram showing a configuration of the motorcycle.
Figs. 3A to 3E are time charts for explanation of an outline of control executed by a controller in shift down.
Fig. 4 is a block diagram showing functions of the controller.
Figs. 5A and 5B show examples of throttle opening maps.
Fig. 6 is a flowchart showing an example of processing executed when an auto mode is selected.
Fig. 7 is a flowchart showing an example of processing executed in gearshift control.
Fig. 8 is a flowchart showing an example of processing executed when a manual mode is selected.
Fig. 9 is a block diagram showing a configuration of a motorcycle of another example.
Fig. 10 is a block diagram showing functions of a controller of the motorcycle shown in Fig. 9.
Fig. 11 is a block diagram showing functions of a controller of yet another motorcycle.

### DETAILED DESCRIPTION OF THE PREFERRED EMBODIMENTS

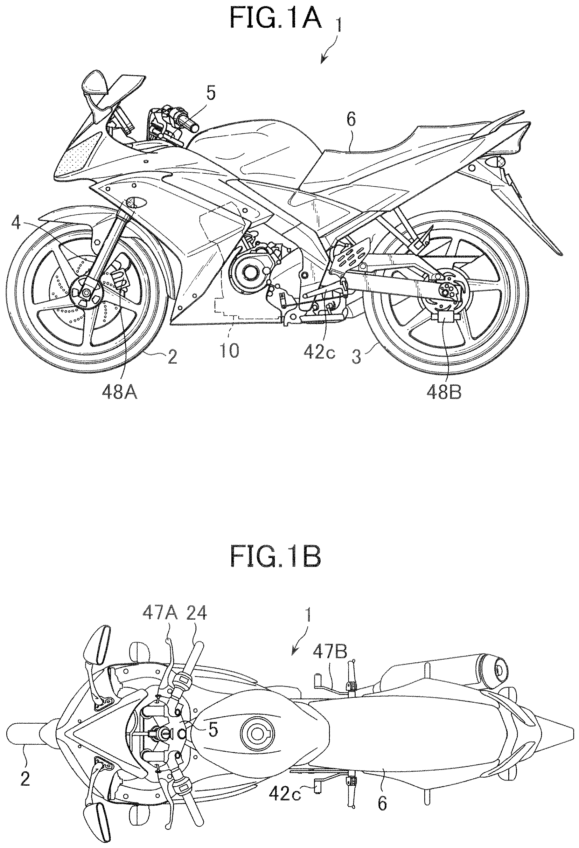

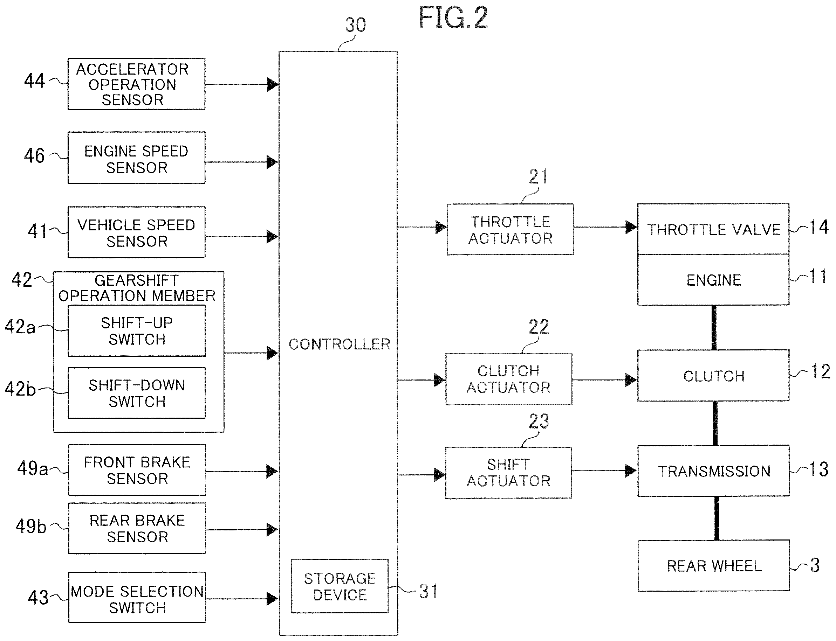

As below, an embodiment will be explained with reference to the drawings. Figs. 1A and 1B show an appearance of a motorcycle 1 as an example of straddle-type vehicle of the embodiment. Fig. 1A is a side view and Fig. 1B is a plan view. Fig. 2 is a block diagram showing a configuration of the motorcycle 1.

As shown in Figs. 1A and 1B, the motorcycle 1 has a front wheel 2. The front wheel 2 is supported at the lower end of a front fork 4. The front fork 4 is connected to a handle 5 through a steering shaft (not shown). The handle 5, the front fork 4, and the front wheel 2 are rotatable to right and left around the steering shaft. A seat 6 is provided at the rear of the handle 5.

The motorcycle 1 has an engine unit 10 and a rear wheel 3 as a driving wheel. As shown in Fig. 2, the engine unit 10 includes an engine 11, a clutch 12, and a transmission 13. The engine 11 has a throttle valve 14 that controls an amount of air to be supplied to the engine 11. The throttle valve 14 is provided within a throttle body placed in an intake path connected to the engine 11, for example. The degree of opening of the throttle valve 14 is controlled by an actuator 21 (hereinafter the degree of opening will be referred as "throttle opening").

As shown in Fig. 2, the clutch 12 and the transmission 13 are provided in a power transmission path from the engine 11 to a rear wheel 3. The clutch 12 is set into a state of transmitting torque of the engine 11 to the transmission 13 (i.e., an engagement state in which a drive member and a driven member of the clutch 12 are engaged) or a state of blocking torque transmission to the transmission 13 (a non-engagement state in which the drive member and the driven member are not engaged). Further, the clutch 12 is set into a state between the engagement state and the non-engagement state (a semi-engagement state) during gearshift operation. In the semi-engagement state, the clutch 12 transmits torque between the engine 11 and the transmission 13, the transmitted torque depending on the degree of engagement of the clutch 12. The motorcycle 1 includes a clutch actuator 22 that operates the clutch 12 so that the power transmission state of the clutch 12 changes.

The transmission 13 has a plurality of gear positions and includes transmission gears corresponding to the respective gear positions. Further, the transmission 13 includes an input shaft to which torque is input from the clutch 12 and an output shaft that outputs torque to the rear wheel 3. The transmission 13 is a constant-mesh transmission. That is, the transmission 13 includes two transmission gears corresponding to each gear position. The two transmission gears are respectively provided on the input shaft and the output shaft and engage with each other. One transmission gear can freely and relatively rotate with respect to the shaft to which the one transmission gear is provided. The other transmission gear engages with the shaft to which the other transmission gear is provided and thus integrally rotate with the shaft. Hereinafter, the transmission gear that can relatively rotate will be referred to as "free rotation gear" and the gear that integrally rotates with the shaft will be referred to as "integral rotation gear". The transmission 13 includes a free rotation gear and an integral rotation gear corresponding to each gear position. For example, the transmission 13 includes a free rotation gear of 1st speed and an integral rotation gear of 1st speed which are arranged on the input shaft and the output shaft, respectively. Further, the transmission 13 includes a free rotation gear of 2nd speed and an integral rotation gear of 2nd speed which are arranged on the output shaft and the input shaft, respectively. The free rotation gear and the integral rotation gear adjacent to the free rotation gear engage by dog clutches formed on their side surfaces, and thereby, torque transmission is performed between the input shaft and the output shaft. For example, when the transmission gears of 1st speed and the transmission gears of 5th speed are adjacent in the shaft direction, the free rotation gear of 1st speed and the integral rotation gear of 5th speed are engaged by their dog clutches, and thereby, torque is transmitted at 1st speed. In a process of changing the gear position, the transmission gear selectively shifts, and then the free rotation gear and the integral rotation gear which has been engaged to form the previous gear position become unengaged. After that, the free rotation gear and the integral rotation gear to form the next gear position become engaged by the dog clutches. The motorcycle 1 includes a shift actuator 23 that shifts the transmission gears so that the gear position of the transmission 13 changes.

In the example in Fig. 2, the motorcycle 1 includes the clutch actuator 22 that operates the clutch 12 and the shift actuator 23 that operates the transmission 13. However, the clutch 12 and the transmission 13 may be operated by a common actuator. That is, one actuator may operate the transmission gear of the transmission 13 and the clutch 12. Further, two clutches may be provided in the motorcycle 1. That is, the transmission 13 may have two input shafts, and the two clutches may be respectively provided in one path from the engine 11 to the one input shaft and the other path from the engine 11 to the other input shaft.

As shown in Fig. 2, the motorcycle 1 includes the controller 30 that controls the engine 11, the clutch 12, and the transmission 13. The controller 30 includes a microprocessor that executes processing related to the control. Further, the controller 30 includes a storage device 31 including a memory such as a ROM (Read Only Memory) or RAM (Random Access Memory). In the storage device 31, programs specifying processing executed by the microprocessor and maps used during execution of processing are stored in advance.

During shift-down operation of the transmission 13, the controller 30 according to the embodiment executes throttle control of temporarily restricting power transmission by the clutch 12 and increases the engine speed. Specifically, the controller 30 temporarily increases the throttle opening during the shift-down operation. That is, the controller 30 performs blipping control on the throttle valve 14. The control executed by the controller 30 will be explained later in detail.

As shown in Fig. 2, the motorcycle 1 includes a vehicle speed sensor 41 for sensing a vehicle speed. The vehicle speed sensor 41 is provided on an axle of the front wheel 2, the output shaft of the transmission 13, or an axle of the rear wheel 3. The controller 30 calculates the vehicle speed based on an output signal of the vehicle speed sensor 41.

The motorcycle 1 includes an engine speed sensor 46 for sensing the engine speed. The controller 30 calculates the engine speed based on an output signal of the engine speed sensor 46.

The motorcycle 1 includes an accelerator grip 24 provided on the handle 5 and operated by the rider (see Fig. 1B). As shown in Fig. 2, the motorcycle 1 includes an accelerator operation sensor 44 for sensing an amount of operation (amount of turn) of the accelerator grip 24. The accelerator operation sensor 44 outputs a signal representing the amount of turn of the accelerator grip 24 to the controller 30.

The motorcycle 1 includes a gearshift operation member 42 operated by the rider. The gearshift operation member 42 employs a shift button (not shown) provided on the handle 5, for example. Further, the gearshift operation member 42 is provided in the lower part of the vehicle body and employs a shift pedal 42c (see Figs. 1A and 1B) for a rider to operate with a foot. The gearshift operation member 42 is provided with a shift-up switch 42a and a shift-down switch 42b for sensing the operation of the rider. The shift-up switch 42a outputs a shift-up request to the controller 30 which is a gearshift request to change the gear position toward top-speed (for example 5th speed or 6th speed). The shift-down switch 42b outputs a shift-down request to the controller 30 which is a gearshift request to change the gear position toward low speed (1st speed). The controller 30 changes the gear position by one level in response to one gearshift request.

The motorcycle 1 includes a braking system. The braking system includes braking devices 48A, 48B that apply a braking force to the vehicle, and brake operation members 47A, 47B operated by the rider to activate the braking devices. The braking device 48A is a front braking device that applies a braking force to the front wheel 2, and the braking device 48B is a rear braking device that provides braking force to the rear wheel 3. The brake operation member 47A is a member for operating the braking device 48A of the front wheel 2, for example, a brake lever (see Fig. 1B) provided on the handle **5.** The brake operation member 47B is a member for operating the braking device 48B of the rear wheel 3, for example, a brake pedal (see Fig. 1B) provided in the lower part of the vehicle body and operated by the rider with a foot.

The motorcycle 1 includes a front brake sensor 49a and a rear brake sensor 49b for sensing the operating state of the braking system as shown in Fig. 2. In one example, the brake sensors 49a, 49b are switches that respectively output signals (on/off-signals) in response to whether or not the brake operation members 47A, 47B are operated. Further, the brake sensors 49a, 49b may be sensors that output signals in response to the amounts of operation of the brake operation members 47A, 47B. When the braking devices 48A, 48B are hydraulically-activated devices, the brake sensors 49a, 49b may be sensors that output signals in response to hydraulic pressure of the braking devices 48A, 48B. The two brake sensors may not necessarily be provided in the motorcycle 1. For example, a common brake sensor to the brake operation members 47A, 47B may be provided. That is, a sensor that turns on when any one of the brake operation members 47A, 47B is operated may be provided.

The controller 30 in this example has an auto mode and a manual mode as control modes of the transmission 13. In the auto mode, the transmission 13 is controlled so that the gear position of the transmission 13 may be set to a gear position according to the vehicle speed and the operation of the accelerator grip 24, which will be described later. In the manual mode, the transmission 13 is controlled according to a gearshift request received from the shift switches 42a, 42b when the gearshift operation member 42 is operated by the rider. The motorcycle 1 includes a mode selection switch 43 operated by the rider. The mode selection switch 43 is operated by the rider and outputs a switch request with respect to the control mode to the controller 30. The controller 30 selects one of the two modes according to the switch request.

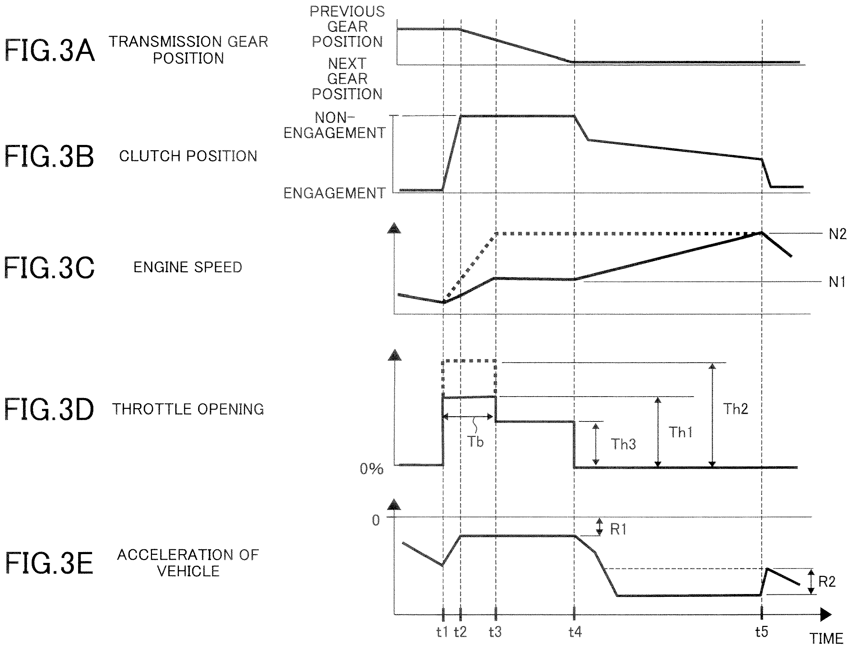

Figs. 3A to 3E are time charts for explanation of an outline of control executed by the controller 30 during shift-down operation. In the charts, Fig. 3A shows the position of the transmission gear. Fig. 3B shows the position of the clutch 12 (degree of engagement). Fig. 3C shows the engine speed. Fig. 3D shows the throttle opening. And Fig. 3E shows the change in acceleration of the vehicle.

In Figs. 3A to 3E, t1 denotes a start time of gearshift control. The gearshift control is started when the shift-down request is received from the shift-down switch 42b or the operation point of the vehicle reaches an operation point at which shift-down operation is to be executed. The operation point is an operating state represented by the vehicle speed and the amount of operation of the accelerator grip 24 (an amount of accelerator operation). As shown in Figs. 3A and 3B, the controller 30 sets the clutch 12 into the non-engagement state at t1. Then, the controller 30 starts shift of the transmission gear according to shift-down operation(t2). When the shift of the transmission gear is completed, i.e., the free rotation gear and the integral rotation gear related to shift-down engage through their dog clutches, the controller 30 sets the clutch 12 into the semi-engagement state and gradually shifts it into the engagement state. When the difference (clutch rotation speed difference) in rotation speed between the drive member of the clutch 12 and the driven member of the clutch 12 is eliminated, the controller 30 returns the clutch 12 into the engagement state (t5) and the shift-down operation is completed.

The engine speed at completion of shift-down operation is a speed depending on a product of the vehicle speed and the transmission gear ratio after the shift-down operation (the transmission gear ratio of the next gear position). Hereinafter, the engine speed at completion of shift-down operation will be referred to as "shift-down completion speed". The transmission gear ratio (reduction ratio = engine speed/vehicle speed) becomes higher by shift-down operation than the transmission gear ratio before shift-down operation. Accordingly, as shown in Fig. 3C, the shift-down completion speed is higher than the engine speed before shift-down operation (N2 shows the shift-down completion speed in Fig. 3C). When the engine speed during shift-down operation reaches the shift-down completion speed, the difference in rotation speed of the clutch 12 is eliminated. That is, the controller 30 returns the clutch 12 into the engagement state when the engine speed reaches the shift-down completion speed (t5).

The controller 30 increases the engine speed toward the shift-down completion speed by controlling the throttle valve 14 during shift-down operation (which is called as "blipping control"), more specifically, while the clutch 12 is set in the non-engagement state. The controller 30 has two modes as modes of the throttle control during shift-down operation. As will be described later in detail, the two modes are selected in response to the operating state of the braking system.

In the first mode, the controller 30 controls the throttle valve 14 so that the engine speed increases to a speed (hereinafter, referred to as "first engine speed N1") lower than the shift-down completion speed. That is, a parameter of control of the throttle valve 14 is set to a value that increases the engine speed to the first engine speed N1. Then, the controller 30 controls the throttle valve 14, according to the value. In the example explained here, the parameter of control is the throttle opening. As shown by a solid line in Fig. 3D, the throttle opening is set to 0% before the start of shift-down operation, i.e., before t1. The controller 30 increases the throttle opening at t1 and sets it to a predetermined first throttle opening Th1. The controller 30 sets the throttle opening to the first throttle opening Th1 by a predetermined time (t1 to t3) (hereinafter, the predetermined time is referred to as "blipping time Tb"). Thereby, the engine speed increases toward the first engine speed N1.

In the second mode, the controller 30 controls the throttle valve 14 so that the engine speed may increase to a second engine speed N2 during shift-down operation. The second engine speed N2 is a speed having a difference smaller than that of the first engine speed N1 from the shift-down completion speed. In the second mode, the parameter of control of the throttle valve 14 is set to a value that increases the engine speed to the second engine speed N2, and the controller 30 controls the throttle valve 14 according to the value. In the example explained here, the parameter of control is the throttle opening. That is, as shown by a broken line in Fig. 3D, the controller 30 increases the throttle opening, sets it to a predetermined second throttle opening Th2, and maintains the throttle opening at the second throttle opening Th2 by the above described blipping time Tb. In the example explained here, the second engine speed N2 is identical to the shift-down completion speed. That is, the second throttle opening Th2 takes a value that increases the engine speed to the shift-down completion speed.

As shown in Fig. 3D, in either of the first mode or the second mode, after a lapse of the blipping time Tb, the controller 30 decreases the throttle opening and sets it to a predetermined speed maintenance throttle opening Th3 (t3). The speed maintenance throttle opening Th3 is a throttle opening set so that the engine speed may be maintained. The engine 11 has rotational resistance, and thus, when the throttle opening is set to 0%, the output torque of the engine 11 is negative torque to decrease the engine speed. The speed maintenance throttle opening Th3 is the throttle opening corresponding to the rotational resistance of the engine 11, i.e., the throttle opening that sets the output torque of the engine 11 to zero. After that, the controller 30 sets the throttle opening to the minimum (0%) after completion of the shift of the transmission gear (t4) and before completion of the shift down.

By performing the above described throttle control and the clutch control during shift-down operation, the engine speed changes as below.

As shown in Fig. 3C, when the throttle control in the first mode is executed, the throttle opening is set to the first throttle opening Th1 and the engine speed starts to increase (t1). Then, after the lapse of the blipping time Tb, the engine speed reaches the first engine speed N1 (**t3**). Then, the throttle opening is set to the speed maintenance throttle opening Th3, and thereby, the engine speed is maintained. When the shift of the transmission gear is completed at t4, the clutch 12 gradually shifts toward the engagement state, and thereby, the engine speed gradually increases toward the shift-down completion speed (N2 in the example of the chart). When the engine speed reaches the shift-down completion speed at t5, the clutch 12 is returned into the engagement state as described above.

As shown in Fig. 3C, when the throttle control in the second mode is executed, the throttle opening is set to the second throttle opening Th2 and the engine speed starts to increase (t1). Then, after the lapse of the blipping time Tb, the engine speed reaches the second engine speed (here, the shift-down completion speed) (**t3**). Then, the throttle opening is set to the speed maintenance throttle opening Th3, and thereby, the engine speed is maintained. When the shift of the transmission gear is completed at t4, the clutch 12 gradually shifts toward the engagement state. Unlike the first mode, in the second mode, the engine speed has already reached the shift-down completion speed, and remains unchanged after t4. When the clutch 12 returns into the engagement state at t5, the shift-down operation ends.

Note that, in Figs. 3A to 3E, in either of the first mode or the second mode, the time from t4 to t5 (clutch semi-engagement time) is the same. However, the second throttle opening Th2 explained here is set so that the engine speed may reach the shift-down completion speed. Accordingly, the clutch semi-engagement time in the second mode may be shorter than the clutch semi-engagement time in the first mode.

By performing the above described throttle control and the clutch control during shift-down operation, the acceleration of the vehicle changes as below.

As described above, in the example explained here, the throttle opening is set to 0% before the start of shift-down operation. Accordingly, as shown in Fig. 3E, the acceleration of the vehicle takes a negative value by the action of the engine brake. When the clutch 12 is set into the non-engagement state at t1, the acceleration of the vehicle increases toward zero to reach negative acceleration (deceleration, R1 in Fig. 3E) due to a traveling resistance of the vehicle, such as an air resistance. The clutch 12 is set in the non-engagement state from t1 to t4, and thereby, the acceleration of the vehicle maintains the deceleration R1 due to the traveling resistance. When the clutch 12 starts shift toward the engagement state at t4, the acceleration of the vehicle becomes lower (the deceleration becomes larger).

When the throttle control is executed in the first mode, the engine speed starts to increase at t4 as shown by a solid line in Fig. 3C. Accordingly, the acceleration of the vehicle is reduced to the acceleration lower than the acceleration (acceleration at t5) at completion of shift-down operation as shown by a solid line in Fig. 3E. That is, large inertia torque acts on the engine 11 due to the increase of the engine speed, and thereby, the torque transmitted to the rear wheel 3 is reduced by the torque according to the inertia torque. As a result, even during the shift-down operation, the engine brake due to the inertia torque acts. When the engine speed reaches the shift-down completion speed at t5, the increase of the engine speed is eliminated. And thus, the inertia torque is eliminated, and the acceleration of the vehicle increases by the acceleration R2 according to the eliminated inertia torque (deceleration becomes smaller).

When the throttle control is executed in the second mode, the change in the engine speed is suppressed in the clutch semi-engagement time (t4 to t5) as shown by a broken line in Fig. 3C. Accordingly, the acceleration of the vehicle is only reduced to the acceleration (acceleration at t5) at completion of shift-down operation as shown by a broken line in Fig. 3E. Therefore, unlike the first mode, inertia torque due to the increase of the engine speed does not act on the engine 11. As a result, during the shift-down operation, the action of the engine brake may be suppressed. When the clutch 12 returns into the engagement state at t5, the engine speed is unchanged, and thus the change in the acceleration (deceleration) of the vehicle can be suppressed.

The first throttle opening takes a value calculated based on the difference between the engine speed before the start of shift down and the first engine speed by an experiment in advance, for example. Similarly, the second throttle opening takes a value calculated based on the difference between the engine speed before the start of shift down and the second engine speed by an experiment in advance, for example. The difference between them depends on the gear position related to the shift-down (that is, depends on the transmission gear ratio before shift-down and the transmission gear ratio after shift-down). As explained later, a plurality of the first throttle openings are defined respectively corresponding to the plurality of the gear positions. Further, a plurality of the second throttle openings are defined respectively corresponding to the plurality of gear positions. During shift-down operation, the controller 30 uses the first throttle opening Th1 (or the second throttle opening Th2) corresponding to the gear position according to the shift-down operation.

The blipping time Tb is set to a time shorter than the time taken for the shift of the transmission gear (t1 to t4 in Figs. 3A to 3E). The first throttle opening Th1 is set so that the engine speed may reach the first engine speed N1 in the blipping time Tb. Further, the second throttle opening Th2 is set so that the engine speed may reach the second engine speed N2 (in this example, the shift-down completion speed) in the blipping time Tb.

In the example explained here, the blipping time Tb applied to the first mode and the blipping time Tb applied to the second mode are equal to each other. However, they may be different from each other. For example, the second engine speed N2 is higher than the first engine speed N1, and thus, the blipping time Tb applied to the second mode may be longer than the blipping time Tb applied to the first mode.

In the following explanation, like the explanation in Figs. 3A to 3E, the shift-down completion speed is set to the second engine speed. Alternatively, the second engine speed may be a rotation speed higher than the first engine speed and different from the shift-down completion speed. That is, the second engine speed N2 may be higher than the first engine speed N1 and lower than the shift-down completion speed.

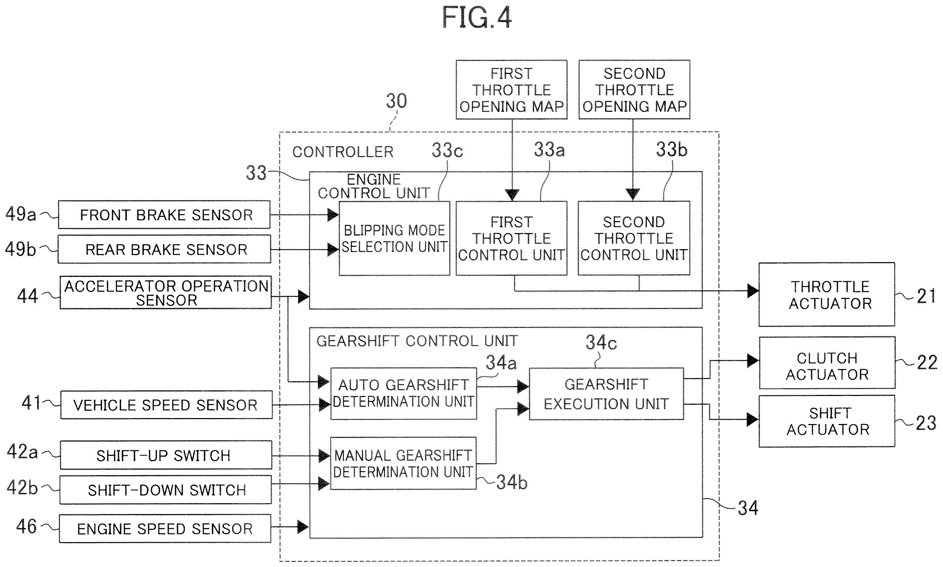

Fig. 4 is a block diagram showing functions of the controller 30. As shown in the same drawing, the controller 30 **includes** an engine control unit 33 and a gearshift control unit 34 as the functions thereof. The functions of the respective units are realized by processing specified by programs stored in the storage device 31.

In normal traveling, i.e., when no shift-down or shift-up is executed, the engine control unit 33 activates the throttle actuator 21 according to the amount of operation of the accelerator grip 24 (hereinafter, referred to as "amount of accelerator operation") sensed by the accelerator operation sensor 44 and controls the throttle valve 14. Specifically, the engine control unit 33 calculates a target throttle opening corresponding to the amount of accelerator operation and controls the throttle opening so that the actual throttle opening become identical to the target throttle opening. At the normal traveling, the engine control unit 33 increases the throttle opening as the amount of accelerator operation increases. Further, when the amount of accelerator operation is 0%, the engine control unit 33 sets the throttle opening to the minimum (0%). And thereby, the torque output by the engine is negative, and the engine brake is obtained.

As shown in Fig. 4, the engine control unit 33 **includes** a blipping mode selection unit 33c, a first throttle control unit 33a, and a second throttle control unit 33b.

The blipping mode selection unit 33c selects one of the above described first mode and second mode according to the operating state of the vehicle. In the embodiment, one of the two modes is selected according to the operating state of the braking system. Specifically, the blipping mode selection unit 33c selects the second mode when the brake operation members 47A, 47B (see Figs. 1A and 1B) are operated. More specifically, the blipping mode selection unit 33c selects the second mode when both the brake operation member 47A for the front wheel 2 and the brake operation member 47B for the rear wheel 3 are operated. Further but not forming part of the invention, the blipping mode selection unit 33c may also select the second mode when the brake operation member 47A for the front wheel 2 is operated, but the brake operation member 47B for the rear wheel 3 is not operated. When the rider intends to reduce the speed of the vehicle faster, the brake operation member 47A for the front wheel 2 or both the brake operation member 47A for the front wheel 2 and the brake operation member 47B for the rear wheel 3 are operated. The second mode is selected in this case, thereby, the action of the engine brake may be suppressed during shift-down operation, and, as a result, riding may be made comfortable.

The detection as to whether or not the brake operation members 47A, 47B are operated can be made by various methods. For example, when the brake sensors 49a, 49b are the switches that output on/off-signals, the blipping mode selection unit 33c detects whether or not signals indicating that the brake operation members 47A, 47B are operated (e.g., on-signals) are output from the brake sensors 49a, 49b. Further, when the brake sensors 49a, 49b are sensors that output signals according to the amounts of operation of the brake operation members 47A, 47B, the blipping mode selection unit 33c detects whether or not the amounts of operation exceed threshold values. When the determination of the operation is performed on each of the brake operation members 47A, 47B, the threshold value with respect to the amount of operation of the brake operation member 47A for the front wheel 2 and the threshold value with respect to the amount of operation of the brake operation member 47B for the rear wheel 3 may be different from each other. When the brake sensors 49a, 49b are sensors that can sense the hydraulic pressure of the braking devices 48A, 48B, the blipping mode selection unit 33c detects whether or not the hydraulic pressure exceeds a threshold value.

When the brake operation members 47A, 47B are operated, i.e., when the braking devices 48A, 48B are activated, the deceleration of the vehicle (the absolute value of the negative acceleration) is larger than the maximum deceleration (normal traveling maximum deceleration) that may be realized in the traveling with the braking devices 48A, 48B deactivated. Accordingly, the blipping mode selection unit 33c may estimate the operating state of the braking system based on the deceleration of the vehicle. That is, the detection with respect to the operation of the brake operation members 47A, 47B may be executed based on the deceleration of the vehicle. In this case, the blipping mode selection unit 33c detects that the brake operation members 47A, 47B are operated when the deceleration of the vehicle is larger than the normal traveling maximum deceleration.

When the first mode is selected, the first throttle control unit 33a executes the above described throttle control in the first mode. Specifically, the first throttle control unit 33a acquires the first throttle opening Th1 corresponding to the gear position according to the shift down executed in traveling (e.g., from 2nd speed to 1st speed, from 3rd speed to 2nd speed, or the like). Then, the first throttle control unit 33a sets the throttle opening to the acquired first throttle opening Th1 in the blipping time Tb.

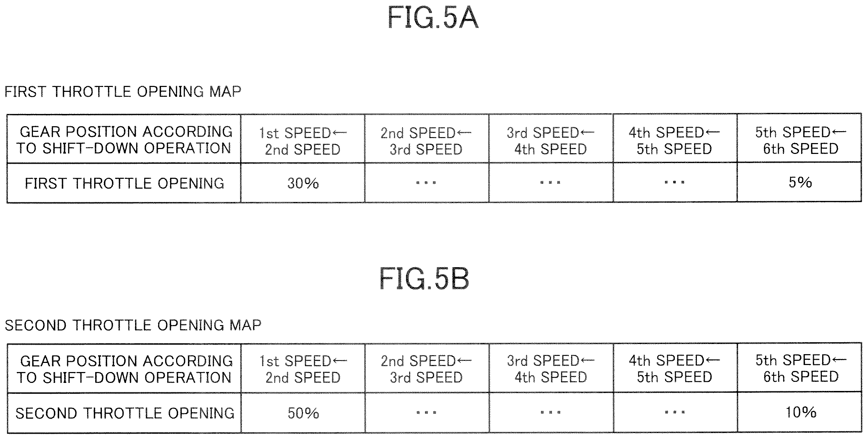

The acquisition processing of the first throttle opening Th1 is performed in the following manner, for example. A map (hereinafter, referred to as "first throttle opening map") associating the first throttle openings Th1 with the gear positions according to shift-down operation is stored in the storage device 31 in advance. Fig. 5A shows an example of the first throttle opening map. As shown in the same drawing, in the map, the first throttle openings Th1 are respectively associated with the gear positions according to shift-down operation. As the gear position according to shift-down operation is higher, the difference between the engine speed before shift down and the engine speed after shift down is smaller. Therefore, the first throttle opening Th1 is smaller as the gear position according to shift-down operation is higher as shown in the drawing. In the processing of the gearshift control unit 34, as will be described later, a gearshift command showing the gear position according to shift-down operation executed in traveling (a shift-down command from second to first, a shift-down command from third to second) is generated.

The first throttle control unit 33a refers to the first throttle opening map and selects the first throttle opening Th1 corresponding to the gearshift command. The first throttle control unit 33a sets the throttle opening to the acquired first throttle opening Th1 in the blipping time Tb. The first throttle control unit 33a sets the throttle opening to the speed maintenance throttle opening after a lapse of the blipping time Tb until the shift completion of the transmission gear (t4 in Figs. 3A to 3E).

The second throttle control unit 33b executes the above described throttle control in the second mode. Specifically, the second throttle control unit 33b acquires the second throttle opening Th2 corresponding to the gear position according to the shift-down operation executed in traveling (e.g., from 2nd speed to 1st speed, from 3rd speed to 2nd speed, or the like). Then, the second throttle control unit 33b sets the throttle opening to the acquired second throttle opening Th2 in the blipping time Tb.

The acquisition processing of the second throttle opening Th2 may be the same as the acquisition processing of the first throttle opening Th1. That is, a map (hereinafter, referred to as "second throttle opening map") associating the second throttle openings Th2 with the gear positions according to shift-down operation is stored in the storage device 31 in advance. Fig. 5B shows an example of the second throttle opening map. As shown in the same drawing, in the map, the second throttle openings Th2 are respectively associated with the gear positions according to shift-down operation. Further, like the first throttle opening Th1, the second throttle opening Th2 is smaller as the gear position according to shift down is higher. Furthermore, the amount of increase in the engine speed in the blipping time Tb in the second mode is larger than the amount of increase in the engine speed in the blipping time Tb in the first mode. Accordingly, the second throttle opening Th2 corresponding to a gear position is larger than the first throttle opening Th1 corresponding to the same gear position.

The second throttle control unit 33b refers to the second throttle opening map and selects the second throttle opening Th2 according to the gearshift command generated by the gearshift control unit 34. The second throttle control unit 33b sets the throttle opening to the selected second throttle opening Th2 in the blipping time Tb. The second throttle control unit 33b sets the throttle opening to the speed maintenance throttle opening Th3 after a lapse of the blipping time Tb until the shift completion of the transmission gear (t4 in Figs. 3A to 3E).

The acquisition processing of the first throttle opening Th1 and the second throttle opening Th2 is not limited to that using the maps. For example, the first throttle control unit 33a may calculate the first throttle opening Th1 based on the transmission gear ratio of the gear position according to shift-down operation, the engine speed, and the vehicle speed using an arithmetic expression specified in advance. Similarly, the second throttle control unit 33b may calculate the second throttle opening Th2 based on the transmission gear ratio of the gear position according to shift-down operation, the engine speed, and the vehicle speed using an arithmetic expression specified in advance.

Further, when the gear position according to shift-down operation is higher, the difference between the engine speed before shift-down operation and the engine speed after shift-down operation (shift-down completion speed) is smaller. Accordingly, when the gear position according to shift-down operation is higher, for example, at shift-down from 6th speed to 5th speed, the increase of the throttle opening by the first throttle control unit 33a and the second throttle control unit 33b may not necessarily be executed. That is, when the gear position according to shift-down operation is higher than a predetermined gear position, the above described control of the first throttle control unit 33a and the second throttle control unit 33b may not necessarily be executed.

In the above explanation, the parameter of control of the throttle valve 14 used for increasing the engine speed during shift-down operation is the throttle opening. Alternatively, the parameter of control may be the blipping time Tb. That is, the first throttle control unit 33a acquires a blipping time Tb corresponding to the gear position according to shift-down operation (hereinafter, referred to as "first blipping time"). Further, the first throttle control unit 33a may set the throttle opening to a predetermined value in the acquired first blipping time. The first blipping time is a time taken for the increase of the engine speed to the first engine speed N1 when the throttle opening is set to the predetermined value. Like the first throttle opening Th1, the first blipping times are respectively defined corresponding to the gear positions according to shift-down operation. Similarly, the second throttle control unit 33b acquires a blipping time Tb corresponding to the gear position according to shift-down operation (hereinafter, referred to as "second blipping time"). Further, the second throttle control unit 33b may increase the throttle opening to a predetermined value in the acquired second blipping time. The second blipping time is a time taken for the increase of the engine speed to the second engine speed N2 when the throttle opening is set to the predetermined value. Like the second throttle opening Th2, the second blipping times are respectively defined corresponding to the gear positions according to shift-down operation.

Alternatively, both the throttle opening and the blipping time may be the parameters of control of the throttle valve 14 used for increasing the engine speed. In this case, both the first throttle opening Th1 and the first blipping time are respectively defined in correspondence with the gear positions according to shift-down operation. Similarly, both the second throttle opening Th2 and the second blipping time are respectively defined in correspondence with the gear positions according to shift-down operation.

The gearshift control unit 34 controls the transmission 13 according to the operating state of the vehicle or the gearshift request input through the switches 42a, 42b from the gearshift operation member 42. As shown in Fig. 4, the gearshift control unit 34 has an auto gearshift determination unit 34a, a manual gearshift determination unit 34b, and a gearshift execution unit 34c.

The auto gearshift determination unit 34a determines whether or not the time to change the gear position has come, based on the operating state sensed by the sensor. The operating state includes the vehicle speed and the amount of operation of the accelerator grip 24 (amount of accelerator operation). That is, the auto gearshift determination unit 34a determines whether or not the current operation point of the vehicle (vehicle speed, amount of accelerator operation) has reached a gearshift point. The auto gearshift determination unit 34a generates a gearshift command when determining that the current operation point has reached an operation point at which gearshift is to be executed (hereinafter, "gearshift point"). The gearshift command is a command indicating the gear position to be set next, for example, from 2nd speed to 3rd speed or from 3rd speed to 2nd speed. The gearshift execution unit 34c executes gearshift operation (shift-up operation or shift-down operation) in response to the gearshift command.

The processing by the auto gearshift determination unit 34a is executed in the following manner, for example. That is, in the storage device 31, maps depending the operation points (i.e., the gearshift points (amounts of accelerator operation, vehicle speeds) at which the gearshift is to be executed (hereinafter, "gearshift maps") are stored in advance. The auto gearshift determination unit 34a refers to the gearshift maps and determines whether or not the vehicle speed and the amount of accelerator operation sensed through the sensors 41, 44 have reached the gearshift point, i.e., whether or not the gearshift time has come. In the storage device 31, a map for shift down (hereinafter, "shift-down map") and a map for shift up (hereinafter, "shift-up map") are stored as the gearshift maps. The shift-down map specifies the gearshift point at which the shift-down operation is executed and the shift-up map specifies the gearshift point at which the shift-up operation is executed.

The manual gearshift determination unit 34b generates a gearshift command indicating the next gear position, based on the current gear position and the gearshift request received through the shift-up switch 42a or the shift-down switch 42b. Further, the manual gearshift determination unit 34b determines whether or not the current operating state of the vehicle (e.g., the engine speed and the vehicle speed) is within a range in which gearshift is allowed. The range is defined depending on the gear positions. The gearshift execution unit 34c executes the gearshift control corresponding to the gearshift command when the current operating state is within the range in which gearshift is allowed.

When the gearshift command is generated by the auto gearshift determination unit 34a or the manual gearshift determination unit 34b, the gearshift execution unit 34c operates the clutch 12 and the transmission gear of the transmission 13 in a predetermined procedure through the clutch actuator 22 and the shift actuator 23, and thereby, executes gearshift in response to the gearshift command. Specifically, as has been explained with reference to Figs. 3A to 3E, the gearshift execution unit 34c first sets the clutch 12 in the non-engagement state. Then, the gearshift execution unit 34c changes the current gear position to the next gear position designated by the gearshift command through shift of the transmission gear and engagement of the transmission gear. Finally, the gearshift execution unit 34c returns the clutch 12 into the engagement state and ends gearshift.

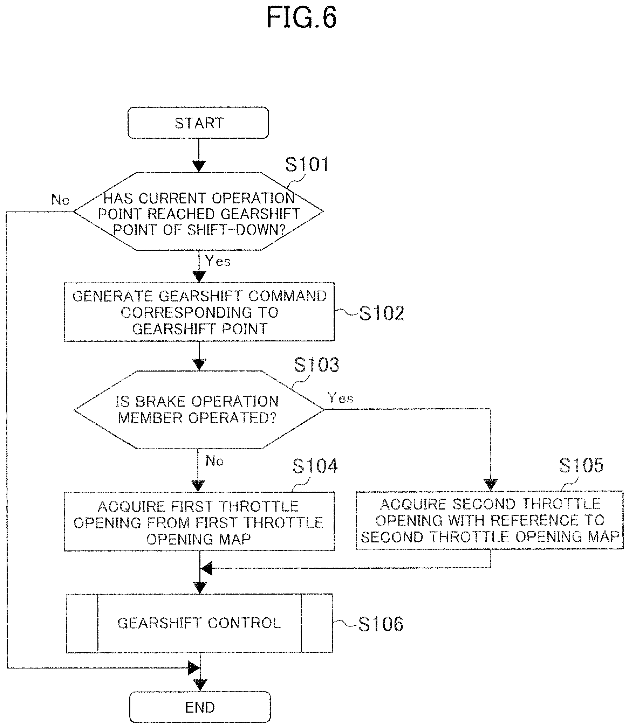

Examples of processing executed by the controller 30 will be explained. Fig. 6 is a flowchart showing an example of processing executed when the auto mode is selected. The processing shown in Fig. 6 is repeatedly executed with a predetermined period while the auto mode is selected.

The auto gearshift determination unit 34a determines whether or not the current operation point (vehicle speed, amount of accelerator operation) has reached the gearshift point of shift-down operation defined by the shift-down map (S101). If the current operation point has not reached the gearshift point, the controller 30 ends the present processing. If the current operation point has reached the gearshift point, the auto gearshift determination unit 34a generates a gearshift command (shift-down command) corresponding to the gearshift point (S102).

The blipping mode selection unit 33c detects whether or not both of the brake operation members 47A, 47B are operated, based on the output signals of the brake sensors 49a, 49b (S103). As described above, when the brake sensors 49a, 49b are switches that output on/off-signals, the blipping mode selection unit 33c determines whether or not the signals indicating that the brake operation members 47A, 47B (e.g., on-signals) are operated are output from both of the brake sensors 49a, 49b. Further, when the brake sensors 49a, 49b are sensors that output signals in response to the amounts of operation of the brake operation members 47A, 47B, the unit determines whether or not both of the amounts of operation have exceeded the threshold values. Furthermore, the blipping mode selection unit 33c may determine whether or not the deceleration of the vehicle has exceeded the above described normal traveling maximum deceleration.

If one of the brake operation members 47A, 47B is not operated, the first mode is selected. That is, the first throttle control unit 33a refers to the first throttle opening map, and acquires the first throttle opening Th1 corresponding to the gearshift command generated at S102 (S104). If both of the brake operation members 47A, 47B are operated at step S103, the second mode is selected. That is, the second throttle control unit 33b refers to the second throttle opening map, and acquires the second throttle opening Th2 corresponding to the gearshift command generated at S102 (S105). After the processing at S104 or S105, the gearshift control that has been explained with reference to Figs. 3A to 3E is executed (S106).

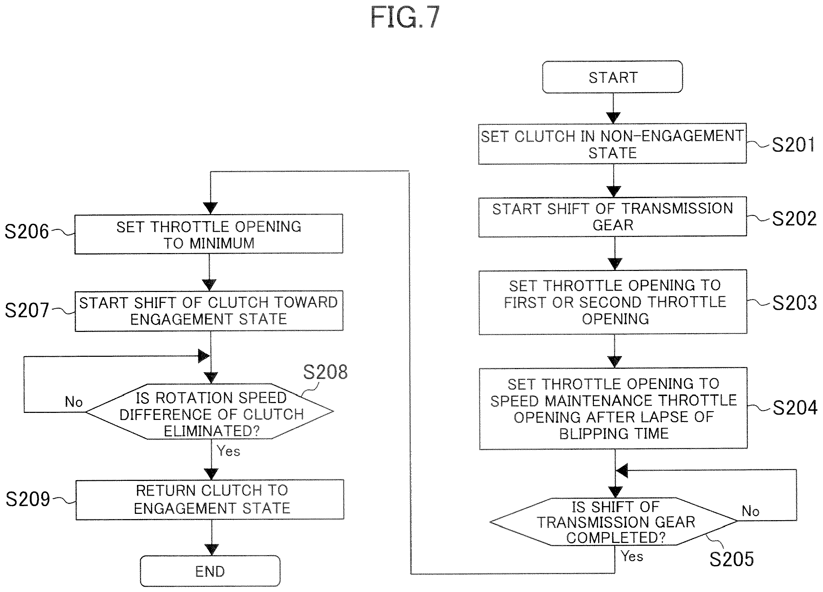

Fig. 7 is a flowchart showing an example of processing executed in the gearshift control at S106.

First, the gearshift execution unit 34c shifts the clutch 12 from the engagement state to the non-engagement state (S201). Then, the gearshift execution unit 34c starts shift of the transmission gear according to the gearshift command (Specifically, shift-down command) (S202). Further, if the first mode is selected, the engine control unit 33 (first throttle control unit 33a) sets the actual throttle opening to the first throttle opening Th1 selected at S104 (S203). On the other hand, if the second mode is selected, the engine control unit 33 (second throttle control unit 33b) sets the actual throttle opening to the second throttle opening Th2 selected at S105 (S203). After a lapse of the blipping time Tb, the engine control unit 33 sets the throttle opening to the speed maintenance throttle opening Th3(S204).

Then, the gearshift execution unit 34c determines whether or not the shift of the transmission gear has been completed (S205), and the processing at S205 is repeated until the shift of the transmission gear is completed. If the shift of the transmission gear has been completed, the engine control unit 33 sets the throttle opening to the minimum (0%) (S206). Further, the gearshift execution unit 34c gradually shifts the clutch 12 from the non-engagement state toward the engagement state (S207). That is, the gearshift execution unit 34c sets the clutch 12 into the semi-engagement state. Then, the gearshift execution unit 34c determines whether or not the rotation speed difference of the clutch 12 has been eliminated, i.e., the engine speed has reached the shift-down completion speed (S208). The gearshift execution unit 34c repeats the processing at S208 until the rotation speed difference of the clutch 12 is eliminated. If the rotation speed difference of the clutch 12 has been eliminated, the gearshift execution unit 34c returns the clutch 12 into the engagement state (S209).

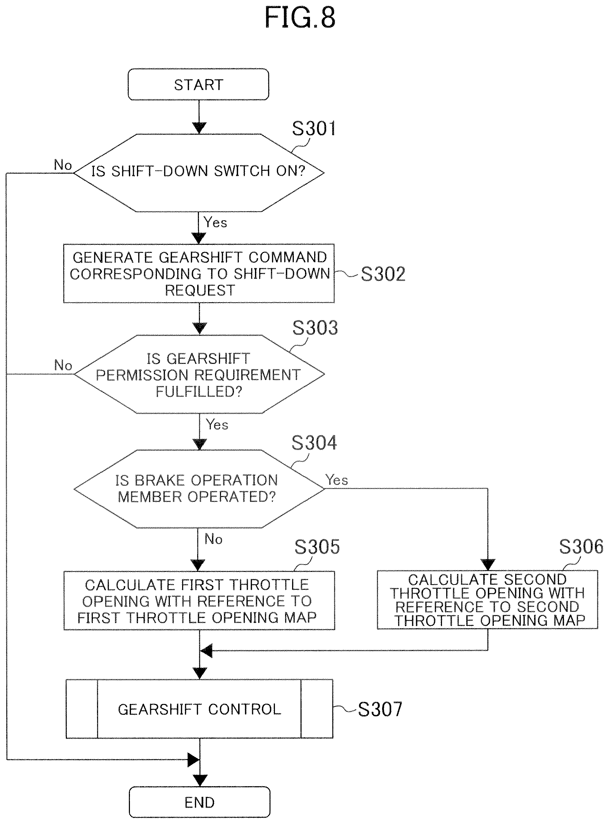

Fig. 8 is a flowchart showing an example of processing executed when the manual mode is selected. The processing shown in Fig. 8 is repeatedly executed with a predetermined period while the manual mode is selected.

The manual gearshift determination unit 34b detects whether a shift-down request has been input from the shift-down switch 42b (S301). If the shift-down request has not been input, the controller 30 ends the present processing. If the shift-down request has been input, the manual gearshift determination unit 34b generates a gearshift command corresponding to the shift-down request according to the current gear position and the shift-down request (S302). Further, the manual gearshift determination unit 34b determines whether or not the current operating state fulfills a gearshift permission requirement (S303). For example, the unit determines whether or not the current engine speed is within the range of the rotation speed in which execution of shift down is allowed. Then, the same processing as the processing that has been explained with reference to Figs. 5A to 6 is executed. That is, the processing at S304 to 307 in Fig. 7 respectively corresponds to the processing at S103 to 106 shown in Fig. 6.

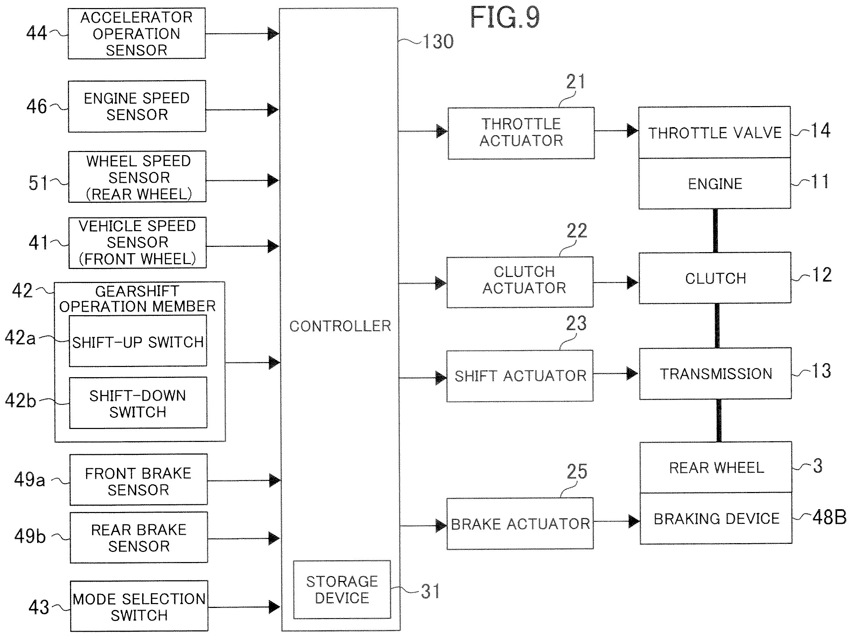

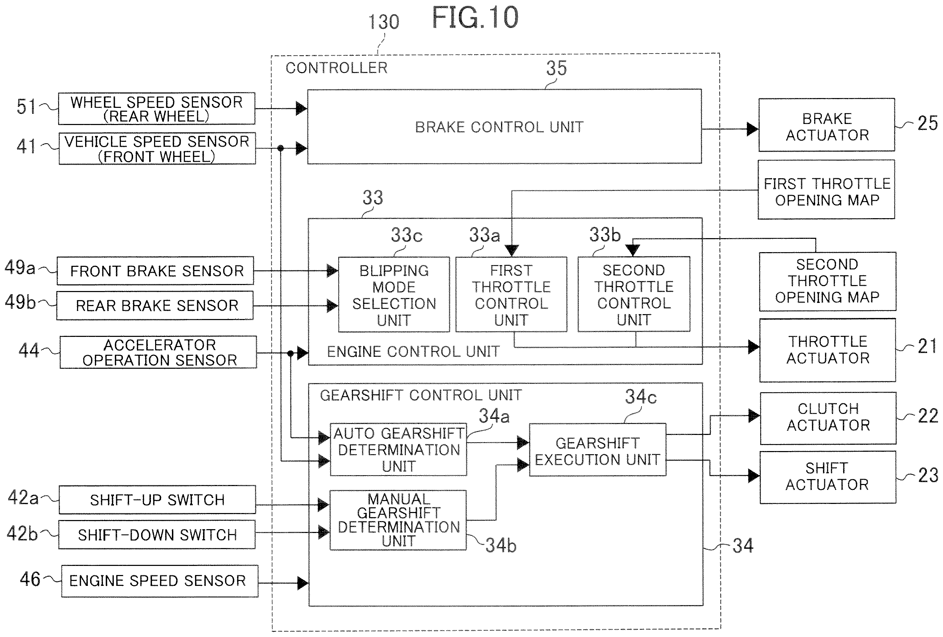

Figs. 9 and 10 are diagrams for explanation of another example of the motorcycle 1. Fig. 9 is a block diagram showing a configuration of the motorcycle of the example. Fig. 10 is a block diagram showing functions of a controller 130 of the motorcycle. The motorcycle of the example shown in the drawings has a brake control unit 35 (see Fig. 10) as a component element of the braking system. The brake control unit 35 executes anti-brake-lock control of suppressing lock of the rear wheel 3 by suppressing the activation of the braking device 48B for the rear wheel 3. When the anti-brake-lock control is activated, the controller 130 executes the throttle control in the second mode. As below, the example will be explained. In Figs. 9 and 10, the same parts explained with reference from Fig. 1A to 8 have the same signs. In the following description, the differences from the example explained with reference from Fig. 1A to 8 will be explained, and the rest is the same.

As shown in Fig. 9, the motorcycle has a brake actuator 25. The braking device 48B is a device hydraulically activated. The brake actuator 25 controls the braking force applied to the rear wheel 3 by decreasing and increasing the brake hydraulic pressure applied to the braking device 48B. The brake actuator 25 is activated according to the input signal from the controller 130. Further, the motorcycle includes a wheel speed sensor 51 in addition to the above described vehicle speed sensor 41. The vehicle speed sensor 41 is provided on the front wheel 2. The wheel speed sensor 51 is provided on the rear wheel 3 as the driving wheel. The controller 130 calculates the rotation speed of the rear wheel 3 based on the output signal of the wheel speed sensor 51.

As shown in Fig. 10, the controller 130 includes the above described brake control unit 35. The brake control unit 35 controls the braking force of the braking device 48B, based on the output signal of the rear brake sensor 49b at normal traveling. Further, as described above, the brake control unit 35 executes the anti-brake-lock control. For example, the brake control unit 35 executes the anti-brake-lock control when the difference between the vehicle speed sensed through the vehicle speed sensor 41 and the rear-wheel rotation speed sensed through the wheel speed sensor 51 exceeds a threshold value or when the deceleration of the rear-wheel rotation speed exceeds a threshold value. In the anti-brake-lock control, the brake control unit 35 reduces the brake hydraulic pressure of the braking device 48B through the brake actuator 25 and reduces the braking force applied to the rear wheel 3.

As described above, the blipping mode selection unit 33c selects one of the two modes of the throttle control according to the operating state of the braking system during shift-down operation. The blipping mode selection unit 33c in the example explained here selects the second mode when the anti-brake-lock control is executed during shift-down operation. That is, the unit selects the second mode when the brake hydraulic pressure of the braking device 48B is reduced by the brake control unit 35 independent of the operation of the brake operation member 47B during shift-down operation. For example, the blipping mode selection unit 33c determines whether or not the anti-brake-lock control is activated with the processing at S103 in Fig. 6 and S304 in Fig. 7 or in place of the processing at S103 and S304. Then, if the anti-brake-lock control is actuated, the blipping mode selection unit 33c selects the second mode. In this manner, when the anti-brake-lock control is activated during shift-down operation, the generation of the engine brake due to the increase of the engine speed may be suppressed. As a result, the unnatural behavior of the vehicle during shift-down operation may be suppressed. Note that the blipping mode selection unit 33c may also select the second mode when the brake operation members 47A, 47B are operated as has been explained with reference to Fig. 4.

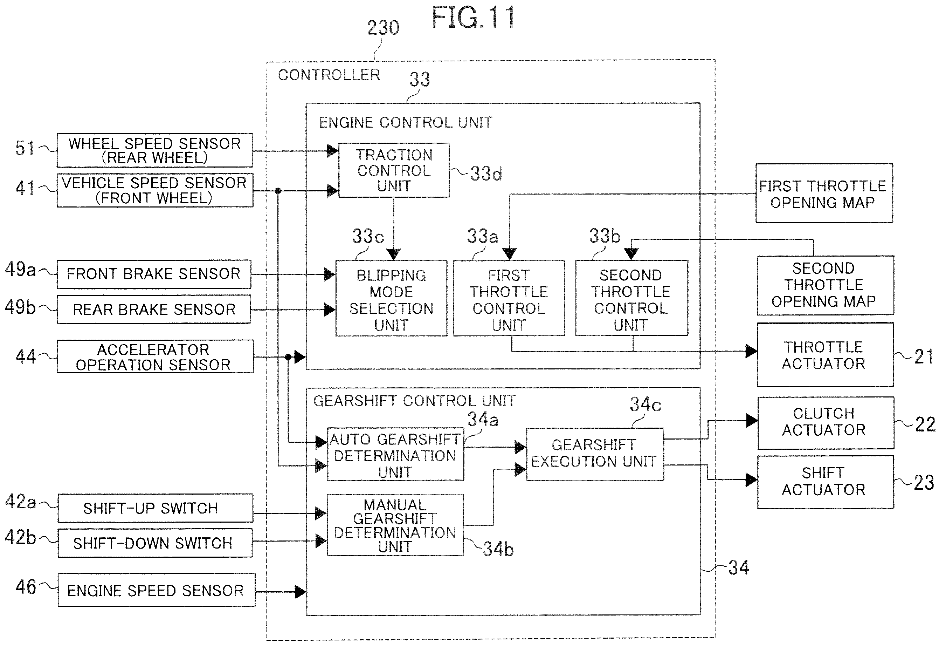

Fig. 11 is a diagram for explanation of yet another example of the motorcycle 1. The diagram is a block diagram showing functions of a controller 230 of the motorcycle of the example. In Fig. 11, the same parts explained with reference from Fig. 1A to 10 have the same signs. In the following description, the differences from the examples explained with reference from Fig. 1A to 10 will be explained, and the rest is the same.

The engine control unit 33 of the controller 230 includes a traction control unit 33d. The traction control unit 33d executes traction control. That is, the traction control unit 33d controls the engine 11 so that the slip ratio or the amount of slip of the rear wheel 3 as the driving wheel may be within a predetermined range. Here, the slip ratio is a ratio between the rotation speed of the rear wheel 3 sensed by the wheel speed sensor 51 and the rotation speed of the front wheel 2 sensed by the vehicle speed sensor 41, for example, and the amount of slip is a difference between them, for example. The traction control unit 33d decreases the torque of the engine 11 when a ratio or a difference between the rotation speed of the front wheel 2 (vehicle speed) and the rotation speed of the rear wheel 3 exceeds a predetermined threshold. The decrease of the torque of the engine 11 can be realized by the decrease of the throttle opening, for example. Further, the decrease of the torque of the engine 11 may be realized by delaying of the ignition timing of the engine 11.

The blipping mode selection unit 33c of the example in Fig. 11 selects the second mode when the traction control is executed during shift-down operation. In other words, the blipping mode selection unit 33c selects the second mode when the ratio or the difference between the rotation speed of the rear wheel 3 and the rotation speed of the front wheel 2 exceeds the predetermined threshold. In this manner, when the traction control is activated during shift-down operation, the generation of the engine brake due to the increase of the engine speed may be suppressed.

According to the embodiment, the motorcycle has been explained as the example of the straddle-type vehicle, however, the teaching may be applied to a four-wheel all terrain vehicle or snowmobile. Further, the motorcycle may be a scooter.

Furthermore, the controllers 30, 130, 230 may have only one of the auto mode and the manual mode as the control mode of the transmission 13.

For example, the parameter of control used in the throttle control during shift-down operation may be the blipping time in place of the throttle opening. Or, both the throttle opening and the blipping time may be used as the parameters of control.

## Claims

1. A straddle-type vehicle comprising:
a front wheel (2);
a rear wheel (3);
a throttle valve (14) adapted to adjust an amount of air supplied to an engine (11);
a transmission (13) including a plurality of transmission gears;
a clutch (12) provided in a power transmission path between the engine (11) and the transmission (13);
a controller (30) adapted to control the engine (11), the transmission (13), and the clutch (12), and during shift-down operation of the transmission (13), adapted to temporarily restrict power transmission through the clutch (12) and to execute throttle control to increase an engine speed; and
a braking system including a front braking device (48A) adapted to apply a braking force to a front wheel (2) of the vehicle, and a rear braking device (48B) adapted to apply a braking force to the rear wheel (3) of the vehicle;
a brake operation member (47A) operated by a rider for operating the front braking device (48A) of the front wheel (2), and a brake operation member (47B) operated by a rider for operating the rear braking device (48B) of the rear wheel (3),
**characterized in that** the controller (30) includes
a first throttle control unit (33a) adapted to set a parameter of control of the throttle valve (14) to a first value and executes throttle control according to the first value, where the first value is set so that the engine speed increases to a first speed lower than a shift-down completion speed which is an engine speed at the time when the shift-down operation is completed, and
a second throttle control unit (33b) adapted to set the parameter of control of the throttle valve (14) to a second value and executes throttle control according to the second value, where the second value is set so that the engine speed increases to a second speed which has a difference smaller than that of the first speed from the shift-down completion speed, and
the controller (30) is adapted to select one of the control by the first throttle control unit (33a) and the control by the second throttle control unit (33b) according to an operating state of the braking system, wherein the controller (30) is adapted to select the control by the second throttle control unit (33b) when the brake operation member (47A) for operating the front braking device (48A) of the front wheel (2) and the brake operation member (47B) for operating the rear braking device (48B) of the rear wheel (3) are operated; and the controller (30) is adapted to select the control by the first throttle control unit (33a) when either one of the brake operation member (47A) for operating the front braking device (48A) of the front wheel (2) and the brake operation member (47B) for operating the rear braking device (48B) of the rear wheel (3) is not operated.

2. A straddle-type vehicle according to claim 1 **characterized in that** the braking system includes a brake control unit (35) adapted to execute anti-brake-lock control to suppress lock of a driving wheel by reducing activation of the braking device (48A,48B), and the controller (30) is adapted to select the control by the second throttle control unit (33b) when the anti-brake-lock control is activated.

3. A straddle-type vehicle according to claim 1 or 2, **characterized in that** the controller (30) is adapted to estimate the operating state of the braking system based on deceleration of the vehicle.

4. A straddle-type vehicle according to at least one of the claims 1 to 3, **characterized in that** the brake operation member (47A) for operating the front braking device (48A) of the front wheel (2) is a brake lever provided on a handle (5) of the vehicle, and the brake operation member (47B) for operating the rear braking device (48B) of the rear wheel (3) is a brake pedal provided in a lower part of a vehicle body and adapted to be operated by a rider with a foot.

5. A method for controlling a straddle-type vehicle with a front wheel (2), a rear wheel (3), a throttle valve (14) that adjusts an amount of air supplied to an engine (11), a transmission (13) including a plurality of transmission gears, a clutch (12) provided in a power transmission path between the engine (11) and the transmission (13), and
a braking system including a front braking device (48A) adapted to apply a braking force to a front wheel (2) of the vehicle, and a rear braking device (48B) adapted to apply a braking force to the rear wheel (3) of the vehicle;
a brake operation member (47A) operated by a rider for operating the front braking device (48A) of the front wheel (2), and a brake operation member (47B) operated by a rider for operating the rear braking device (48B) of the rear wheel (3), the method comprises:
temporarily restrict power transmission through the clutch (12) and executing throttle control to increase an engine speed during shift-down operation of the transmission (13),
**characterized by**
setting a parameter of control of the throttle valve (14) to a first value and executing throttle control according to the first value, where the first value is set so that the engine speed increases to a first speed lower than a shift-down completion speed which is an engine speed at the time when the shift-down operation is completed, and
setting the parameter of control of the throttle valve (14) to a second value and executing throttle control according to the second value, where the second value is set so that the engine speed increases to a second speed which has a difference smaller than that of the first speed from the shift-down completion speed, and
selecting one of the control by the first value and the second value according to an operating state of the braking system, wherein selecting the control by the second value when the brake operation member (47A) for operating the front braking device (48A) of the front wheel (2) and the brake operation member (47B) for operating the rear braking device (48B) of the rear wheel (3) are operated; and
selecting the control by the first throttle control unit (33a) when either one of the brake operation member (47A) for operating the front braking device (48A) of the front wheel (2) and the brake operation member (47B) for operating the rear braking device (48B) of the rear wheel (3) is not operated.

6. A method for controlling a straddle-type vehicle according to claim 5, **characterized by** executing anti-brake-lock control to suppress lock of a driving wheel by reducing activation of the braking device (48A,48B), and
selecting the control by the second value when the anti-brake-lock control is activated.

7. A method for controlling a straddle-type vehicle according to claim 5 or 6, **characterized by** estimating the operating state of the braking system based on deceleration of the vehicle.

## Patentansprüche

1. Ein Spreiz-Sitz-Typ-Fahrzeug, das umfasst:
ein Vorder-Rad (2);
ein Hinter-Rad (3);
ein Drossel-Ventil (14), das angepasst ist, um eine Menge von Luft, zugeführt zu einem Motor (11), einzustellen;
ein Getriebe (13), das eine Mehrzahl von Getriebe-Stufen umfasst;
eine Kupplung (12), die in einem Leistungs-Übertragungs-Pfad zwischen dem Motor (11) und dem Getriebe (13) vorgesehen ist;
eine Steuerung (30), die angepasst ist, um den Motor (11), das Getriebe (13) und die Kupplung (12) zu steuern, und, während einer Herunter-Schalt-Betätigung des Getriebes (13), angepasst ist, um temporär Leistungs-Übertragung durch die Kupplung (12) zu beschränken, und Drossel-Steuerung auszuführen, um eine Motor-Geschwindigkeit zu erhöhen; und
ein Brems-System, das eine Vorder-Brems-Vorrichtung (48A), angepasst um eine Brems-Kraft auf ein Vorder-Rad (2) des Fahrzeugs aufzubringen, und eine Hinter-Brems-Vorrichtung (48B), angepasst um eine Brems-Kraft auf das Hinter-Rad (3) des Fahrzeugs aufzubringen, beinhaltet;
ein Brems-Betätigungs-Element (47A), das durch einen Fahrer betätigt ist, zum Betätigen der Vorder-Brems-Vorrichtung (48A) des Vorder-Rads (2), und ein Brems-Betätigungs-Element (47B), das durch einen Fahrer betätigt ist, zum Betätigen der Hinter-Brems-Vorrichtung (48B) des Hinter-Rads (3),
**dadurch gekennzeichnet, dass** die Steuerung (30) beinhaltet
eine erste Drossel-Steuer-Einheit (33a), die angepasst ist um einen Parameter der Steuerung des Drossel-Ventils (14) auf einen ersten Wert zu setzen, und eine Drossel-Steuerung gemäß dem ersten Wert auszuführen, indem der erste Wert gesetzt ist, so dass die Motor-Geschwindigkeit sich auf eine erste Geschwindigkeit, niedriger als eine Herunter-Schalt-Vervollständigungs-Geschwindigkeit, erhöht, die eine Motor-Geschwindigkeit ist, zu dem Zeitpunkt, wenn die Herunter-Schalt-Betätigung abgeschlossen ist, und
eine zweite Drossel-Steuer-Einheit (33b), die angepasst ist um den Parameter der Steuerung des Drossel-Ventils (14) auf einen zweiten Wert zu setzen, und eine Drossel-Steuerung gemäß dem zweiten Wert auszuführen, indem der zweite Wert gesetzt ist, so dass die Motor-Geschwindigkeit sich auf eine zweite Geschwindigkeit, die einen Unterschied von der Herunter-Schalt-Vervollständigungs-Geschwindigkeit hat, kleiner als jener der ersten Geschwindigkeit, erhöht, und
die Steuerung (30) ist angepasst, um eine von den Steuerungen durch die erste Drossel-Steuer-Einheit (33a) und die Steuerung durch die zweite Drossel-Steuer-Einheit (33b) gemäß eines Betätigungs-Zustandes des Brems-Systems auszuwählen,
wobei die Steuerung (30) angepasst ist, um die Steuerung durch die zweite Drossel-Steuer-Einheit (33b) auszuwählen, wenn das Brems-Betätigungs-Element (47A) für die Betätigung der Vorder-Brems-Vorrichtung (48A) des Vorder-Rads (2) und das Brems-Betätigungs-Element (47B) zum Betätigen der Hinter-Brems-Vorrichtung (48B) des Hinter-Rads (3) betätigt sind; und die Steuerung (30) ist angepasst, um die Steuerung durch die erste Drossel-Steuer-Einheit (33a) auszuwählen, wenn eines von dem Brems-Betätigungs-Element (47A) zur Betätigung der Vorder-Brems-Vorrichtung (48A) des Vorder-Rads (2) und das Brems-Betätigungs-Element (47B) zur Betätigung der Hinter-Brems-Vorrichtung (48B) des Hinter-Rads (3) nicht betätigt ist.

2. Ein Spreiz-Sitz-Typ-Fahrzeug gemäß Anspruch 1, **dadurch gekennzeichnet, dass** das Brems-System eine Brems-Steuer-Einheit (35) beinhaltet, die angepasst ist, um eine Anti-Brems-Blockierungs-Steuerung auszuführen, um ein Blockieren eines Antriebs-Rads zu durch Reduzierung der Aktivierung der Brems-Vorrichtung (48A, 48B) unterdrücken, und die Steuerung (30) ist angepasst, um die Steuerung durch die zweite Drossel-Steuer-Einheit (33b) auszuwählen, wenn die Anti-Brems-Blockierungs-Steuerung aktiviert ist.

3. Ein Spreiz-Sitz-Typ-Fahrzeug gemäß Anspruch 1 oder 2, **dadurch gekennzeichnet, dass** die Steuerung (30) angepasst ist, um den Betätigungs-Zustand des Brems-Systems auf Grundlage der Verzögerung des Fahrzeugs zu bestimmen.

4. Ein Spreiz-Sitz-Typ-Fahrzeug gemäß irgendeinem der Ansprüche 1 bis 3, **dadurch gekennzeichnet, dass** das Brems-Betätigungs-Element (47A) zur Betätigung der Vorder-Brems-Vorrichtung (48A) des Vorder-Rads (2) ein Brems-Hebel ist, der an einer Lenk-Stange (5) des Fahrzeugs vorgesehen ist, und das Brems-Betätigungs-Element (47B) zum Betätigen der Hinter-Brems-Vorrichtung (48B) des Hinter-Rads (3) ist ein Brems-Pedal, das in einem unteren Teil eines Fahrzeug-Körpers vorgesehen ist, und angepasst ist, um durch einen Fahrer mit einem Fuß betätigt zu werden.

5. Ein Verfahren zur Steuerung eines Spreiz-Sitz-Typ-Fahrzeugs mit einem Vorder-Rad (2), einem Hinter-Rad (3), einem Drossel-Ventil (14), das eine Menge von Luft, zugeführt zu einem Motor (11), einstellt, einem Getriebe (13), das eine Mehrzahl von Getriebe-Stufen umfasst, einer Kupplung (12), die in einem Leistungs-Übertragungs-Pfad zwischen dem Motor (11) und dem Getriebe (13) vorgesehen ist, und
einem Brems-System, das eine Vorder-Brems-Vorrichtung (48A), angepasst um eine Brems-Kraft auf ein Vorder-Rad (2) des Fahrzeugs aufzubringen, und eine Hinter-Brems-Vorrichtung (48B), angepasst um eine Brems-Kraft auf das Hinter-Rad (3) des Fahrzeugs aufzubringen, beinhaltet;
einem Brems-Betätigungs-Element (47A), das durch einen Fahrer betätigt ist, zum Betätigen der Vorder-Brems-Vorrichtung (48A) des Vorder-Rads (2), und ein Brems-Betätigungs-Element (47B), das durch einen Fahrer betätigt ist, zum Betätigen der Hinter-Brems-Vorrichtung (48B) des Hinter-Rads (3), das Verfahren umfasst:
temporäre Beschränkung einer Leistungs-Übertragung durch die Kupplung (12) und Ausführen einer Drossel-Steuerung, um eine Motor-Geschwindigkeit zu erhöhen, während einer Herunter-Schalt-Betätigung des Getriebes (13); und
**gekennzeichnet durch**
Setzen eines Parameters der Steuerung des Drossel-Ventils (14) auf einen ersten Wert, und Ausführen einer Drossel-Steuerung gemäß dem ersten Wert, indem der erste Wert gesetzt ist, so dass die Motor-Geschwindigkeit sich auf eine erste Geschwindigkeit, niedriger als eine Herunter-Schalt-Vervollständigungs-Geschwindigkeit, erhöht, die eine Motor-Geschwindigkeit ist, zu dem Zeitpunkt, wenn die Herunter-Schalt-Betätigung abgeschlossen ist, und
Setzen des Parameters der Steuerung des Drossel-Ventils (14) auf einen zweiten Wert, und Ausführen einer Drossel-Steuerung gemäß dem zweiten Wert, indem der zweite Wert gesetzt ist, so dass die Motor-Geschwindigkeit sich auf eine zweite Geschwindigkeit, die einen Unterschied von der Herunter-Schalt-Vervollständigungs-Geschwindigkeit hat, kleiner als jener der ersten Geschwindigkeit, erhöht, und Auswählen der Steuerungen durch einen von dem ersten Wert und dem zweiten Wert gemäß eines Betätigungs-Zustandes des Brems-Systems, wobei Auswählen der Steuerung durch den zweiten Wert wenn das Brems-Betätigungs-Element (47A) für die Betätigung der Vorder-Brems-Vorrichtung (48A) des Vorder-Rads (2) und das Brems-Betätigungs-Element (47B) zum Betätigen der Hinter-Brems-Vorrichtung (48B) des Hinter-Rads (3) betätigt sind; und Auswählen der Steuerung durch die erste Drossel-Steuer-Einheit (33a), wenn eines von dem Brems-Betätigungs-Element (47A) zur Betätigung der Vorder-Brems-Vorrichtung (48A) des Vorder-Rads (2) und das Brems-Betätigungs-Element (47B) zur Betätigung der Hinter-Brems-Vorrichtung (48B) des Hinter-Rads (3) nicht betätigt ist.

6. Ein Verfahren zur Steuerung eines Spreiz-Sitz-Typ-Fahrzeugs gemäß Anspruch 5, **gekennzeichnet durch** Ausführen einer Anti-Brems-Blockierungs-Steuerung, um ein Blockieren eines Antriebs-Rads zu durch Reduzierung der Aktivierung der Brems-Vorrichtung (48A, 48B) unterdrücken, und
Auswählen der Steuerung durch den zweiten Wert, wenn die Anti-Brems-Blockierungs-Steuerung aktiviert ist.

7. Ein Verfahren zur Steuerung eines Spreiz-Sitz-Typ-Fahrzeugs gemäß Anspruch 5 oder 6, **gekennzeichnet durch** Bestimmung des Betätigungs-Zustands des Brems-Systems auf Grundlage der Verzögerung des Fahrzeugs.

## Revendications

1. Véhicule de type à enfourcher comprenant :
une roue avant (2) ;
une roue arrière (3) ;
une vanne d'accélérateur (14) adaptée pour ajuster une quantité d'air alimentée à un moteur (11) ;
une transmission (13) comprenant une pluralité d'engrenages de transmission ;
un embrayage (12) pourvu dans un chemin de transmission de puissance entre le moteur (11) et la transmission (13) ;
un contrôleur (30) adapté pour contrôler le moteur (11), la transmission (13) et l'embrayage (12), et durant l'opération de rétrogradation de la transmission (13), adapté pour restreindre temporellement la transmission de puissance via l'embrayage (12) et pour exécuter le contrôle d'accélérateur afin d'augmenter la vitesse du moteur ; et
un système de freinage comprenant un dispositif de freinage avant (48A) adapté pour appliquer une force de freinage à une roue avant (2) du véhicule, et un dispositif de freinage arrière (48B) adapté pour appliquer une force de freinage à la roue arrière (3) du véhicule ;
un élément d'actionnement de frein (47A) actionné par le conducteur pour actionner le dispositif de freinage avant (48A) de la roue avant (2), et un élément d'actionnement de frein (47B) actionné par le conducteur pour actionner le dispositif de freinage arrière (48B) de la roue arrière (3),
**caractérisé en ce que** le contrôleur (30) comprend
une première unité de contrôle d'accélérateur (33a) adaptée pour établir un paramètre de contrôle de la vanne d'accélérateur (14) à une première valeur et exécuter un contrôle d'accélérateur conformément à la première valeur, où la première valeur est établie de telle sorte que la vitesse du moteur augmente jusqu'à une première vitesse inférieure à une vitesse de réalisation de rétrogradation qui est une vitesse du moteur au moment où l'opération de rétrogradation est réalisée, et
une deuxième unité de contrôle d'accélérateur (33b) adaptée pour établir le paramètre de contrôle de la vanne d'accélérateur (14) à une deuxième valeur et exécuter un contrôle d'accélérateur selon la deuxième valeur, où la deuxième valeur est établie de telle sorte que la vitesse du moteur augmente jusqu'à une deuxième vitesse qui présente une différence inférieure à celle de la première vitesse depuis la vitesse de réalisation de rétrogradation, et
le contrôleur (30) est adapté pour sélectionner un contrôle parmi le contrôle par la première unité de contrôle d'accélérateur (33a) et le contrôle par la deuxième unité de contrôle d'accélérateur (33b) conformément à un état de fonctionnement du système de freinage, dans lequel le contrôleur (30) est adapté pour sélectionner le contrôle par la deuxième unité de contrôle d'accélérateur (33b) quand l'élément d'actionnement de frein (47A) pour actionner le dispositif de freinage avant (48A) de la roue avant (2) et l'élément d'actionnement de frein (47B) pour actionner le dispositif de freinage arrière (48B) de la roue arrière (3) sont actionnés, et
le contrôleur (30) est adapté pour sélectionner le contrôle par la première unité de contrôle d'accélérateur (33a) quand soit l'élément d'actionnement de frein (47A) pour actionner le dispositif de freinage avant (48A) de la roue avant (2), soit l'élément d'actionnement de frein (47B) pour actionner le dispositif de freinage arrière (48B) de la roue arrière (3) n'est pas actionné.

2. Véhicule de type à enfourcher selon la revendication 1, **caractérisé en ce que**
le système de freinage comprend une unité de contrôle de frein (35) adaptée pour exécuter un contrôle d'antiblocage de roue pour supprimer le blocage d'une roue motrice en réduisant l'activation du dispositif de freinage (48A, 48B), et
le contrôleur (30) est adapté pour sélectionner le contrôle par la deuxième unité de contrôle d'accélérateur (33b) quand le contrôle d'anti-blocage de roue est activé.

3. Véhicule de type à enfourcher selon la revendication 1 ou 2, **caractérisé en ce que** le contrôleur (30) est adapté pour estimer l'état de fonctionnement du système de freinage sur base d'une décélération du véhicule.

4. Véhicule de type à enfourcher selon au moins une des revendications 1 à 3, **caractérisé en ce que** l'élément d'actionnement de frein (47A) pour actionner le dispositif de freinage avant (48A) de la roue avant (2) est un levier de frein pourvu sur une poignée (5) du véhicule, et l'élément d'actionnement de frein (47B) pour actionner le dispositif de freinage arrière (48B) de la roue arrière (3) est une pédale de frein pourvue dans une partie inférieure d'un corps de véhicule et adaptée pour être actionnée par un pied du conducteur.

5. Procédé de contrôle d'un véhicule de type à enfourcher avec une roue avant (2), une roue arrière (3), une vanne d'accélérateur (14) qui ajuste la quantité d'air alimentée au moteur (11), une transmission (13) comprenant une pluralité d'engrenages de transmission, un embrayage (12) pourvu dans un chemin de transmission de puissance entre le moteur (11) et la transmission (13), et un système de freinage comprenant un dispositif de freinage avant (48A) adapté pour appliquer une force de freinage à une roue avant (2) du véhicule, et un dispositif de freinage arrière (48B) adapté pour appliquer une force de freinage à la roue arrière (3) du véhicule ; un élément d'actionnement de frein (47A) actionné par le conducteur pour actionner le dispositif de freinage avant (48A) de la roue avant (2), et un élément d'actionnement de frein (47B) actionné par le conducteur pour actionner le dispositif de freinage arrière (48B) de la roue arrière (3),
le procédé comprenant :
la restriction temporaire de la transmission de puissance via l'embrayage (12) et l'exécution d'un contrôle d'accélérateur pour augmenter la vitesse du moteur durant une opération de rétrogradation de la transmission (13),
**caractérisé par**
l'établissement d'un paramètre de contrôle de la vanne d'accélérateur (14) à une première valeur et l'exécution d'un contrôle d'accélérateur conformément à la première valeur, où la première valeur est établie de telle sorte que la vitesse du moteur augmente jusqu'à une première vitesse inférieure à une vitesse de réalisation de rétrogradation, qui est une vitesse du moteur au moment où l'opération de rétrogradation est réalisée, et
l'établissement du paramètre de contrôle de la vanne d'accélérateur (14) à une deuxième valeur et l'exécution d'un contrôle d'accélérateur conformément à la deuxième valeur, où la deuxième valeur est établie de telle sorte que la vitesse du moteur augmente jusqu'à une deuxième vitesse qui présente une différence inférieure à celle de la première vitesse par rapport à la vitesse de réalisation de rétrogradation, et
la sélection d'un contrôle soit par la première valeur, soit par la deuxième valeur, conformément à un état de fonctionnement du système de freinage, dans lequel le contrôle par la deuxième valeur est sélectionné quand l'élément d'actionnement de frein (47A) pour actionner le dispositif de freinage avant (48A) de la roue avant (2) et l'élément d'actionnement de frein (47B) pour actionner le dispositif de freinage arrière (48B) de la roue arrière (3) sont actionnés ; et
la sélection du contrôle par la première unité de contrôle d'accélérateur (33a) quand soit l'élément d'actionnement de frein (47A) pour actionner le dispositif de freinage avant (48A) de la roue avant (2), soit l'élément d'actionnement de frein (47B) pour actionner le dispositif de freinage arrière (48B) de la roue arrière (3) n'est pas actionné.

6. Procédé de contrôle d'un véhicule de type à enfourcher selon la revendication 5, **caractérisé par**
l'exécution d'un contrôle d'anti-blocage de roue pour supprimer le blocage d'une roue motrice en réduisant l'activation du dispositif de freinage (48A, 48B), et
la sélection du contrôle par la deuxième valeur quand le contrôle d'anti-blocage de roue est activé.

7. Procédé de contrôle d'un véhicule de type à enfourcher selon la revendication 5 ou 6, **caractérisé par** l'estimation de l'état de fonctionnement du système de freinage sur base d'une décélération du véhicule.
